# EUROPÄISCHE PATENTSCHRIFT

(11) **EP 1 696 637 B1**
(45) Veröffentlichungstag und Bekanntmachung des Hinweises auf die Patenterteilung: **02.01.2008**
(21) Anmeldenummer: 05004272.0
(22) Anmeldetag: 28.02.2005
(51) Int. Cl.: H04L 29/12, H04L 12/56

(54) **Verfahren zur Reduktion von Datenpaketverlusten beim Aktualisieren einer Adresstabelle**
Procedure for reducing packet loss during update of address table
Procédé permettant de réduire la perte de paquets dans la mise à jour d'un table d'adresses

(43) Veröffentlichungstag der Anmeldung: 30.08.2006
(73) Patentinhaber: Siemens AG, 80333 München (DE)
(72) Erfinder: Meyer, Hannes, 83071 Stephanskirchen-Schlossb (DE); Schwank, Klaus-Peter, 82152 Martinsried (DE); Seifert, Joachim, 81827 München (DE); Vierthaler, Richard, 80687 München (DE)
(74) Vertreter: Berg, Peter

(56) Entgegenhaltungen:
- US-B1- 6 747 979
- HEIKO NIEDERMAYER: "Grundlagen zu Kommunikationsnetzen und Warteschlangentheorie"[Online] 2004, Seiten 1-10, XP002327988 UNIVERSITÄT TÜBINGEN Gefunden im Internet: URL:http://net.informatik.uni-tuebingen.de /teaching/kommnetze/pdf_ws04/GrundlagenUnd Warteschlangen.pdf> [gefunden am 2005-05-12]
- INTERNET ENGINEERING TASK FORCE R BRADEN ET AL: "Requirements for Internet Hosts -- Communication Layers" IETF STANDARD, INTERNET ENGINEERING TASK FORCE, IETF, CH, Oktober 1989 (1989-10), Seiten 21-26, XP015006065 ISSN: 0000-0003

## Beschreibung

Die Erfindung betrifft ein Verfahren zur Reduktion von Datenpaketverlusten beim Aktualisieren einer Adresstabelle, die in einem Rechner eines lokalen Netzwerkes abgelegt wird und Zuordnungen von im lokalen Netzwerk geltenden Rechneradressen zu im Internet gültigen Rechneradressen zum Versand von Datenpaketen umfasst, wobei eine in der Adresstabelle abgelegte Adresszuordnung nach Ablauf eines Gültigkeitstimers aktualisiert wird, und wobei diese Adresszuordnung erst neu abgefragt und in die Adresstabelle eingetragen wird, wenn wieder ein Datenpaket an eine im Internet gültige Rechneradresse versandt wird.

Als Internet wird im allgemeinen ein großes, globales, aber dezentrales Computernetzwerk bezeichnet, das aus vielen Teilnetzen besteht. Solche Teilnetze können beispielsweise lokale Netzwerke sein, die räumlich begrenzt sind. Diese Lokalen Netzwerke werden auch als Local Area Networks oder kurz LAN bezeichnet und können beispielsweise Rechnernetze von einzelnen Unternehmen oder Institutionen sein.

Für den Datentransfer im Internet bzw. von oder zu den einzelnen Teilnetzen des Internets wird das sogenannte Internet-Protokoll oder kurz IP eingesetzt. Das IP ist für den verbindungslosen Transport von Daten in Paketform - sogenannten IP-Datenpaketen - von einem Rechner in einem Teilnetz zu einem Zielrechner in einem Teilnetz über mehrere Teilnetze hinweg zuständig. Damit ein IP-Datenpaket zu einem bestimmten Rechner in einem Teilnetzwerk geleitet werden kann, wird im IP eine Adressierung der Rechner der Teilnetze vorgenommen. Jedem Rechner wird bei seiner Einrichtung eine im Internet gültige Rechneradresse, die sogenannte IP-Adresse zugewiesen.

Die weitere Erläuterung des Kommunikationsvorganges erfolgt unter Zuhilfenahme des OSI-Referenzmodells, welches für die Beschreibung dieses Vorganges besonders zweckmäßig erscheint. Das OSI-Referenzmodell umfasst 7 Schichten, wobei
- die erste Schicht Protokolle definiert, die unmittelbar auf dem Medium operieren,
- die zweite Schicht Daten, die zwischen zwei Stationen ausgetauscht werden, mit einem fehlererkennenden und/oder -korrigierenden Protokoll überträgt,
- die dritte Schicht die Übertragung von Datenpaketen übernimmt,
- die 4. Schicht sich um die Ende-zu-Ende-Verbindung kümmert,
- die 5. Schicht als Hauptaufgabe die Aufnahme, die grundlegende Durchführung und Beendigung einer Sitzung aus der Anwendungsschicht (auch als Schicht 7 bezeichnet) hat,
- die 6. Schicht die Daten interpretiert und die korrekte Syntax sicherstellt und
- die 7. Schicht dem Anwender und seinen Programmen direkt verteilte Datenübertragungsanwendungen zur Verfügung stellt.

Nach dem OSI-Referenzmodell wird nun die Adressierung eines Rechners mittels IP-Adresse der Schicht 3 zugeordnet. Mit der IP-Adresse ist ein Rechner im Internet bzw. im Teilnetz, dem er zugeordnet ist, eindeutig adressierbar. Das bedeutet, dass ein Datenpaket anhand dieser in Internet gültigen Adresse von einem sendenden Rechner zu einem Zielrechner übertragen wird, wobei die beiden Rechner in verschiedenen Teilnetzen liegen. Die Weiterleitung der Datenpakete zwischen den Teilnetzen erfolgt anhand der IP-Adresse. Dabei werden nach dem OSI-Referenzmodell in der Schicht 3, die auch als Netzwerkschicht bezeichnet wird, von der Schicht 2 des OSI-Referenzmodells, die auch Leitungsschicht genannt wird, empfangene Datenpakete übernommen. Es wird dann in der Schicht 3 anhand der IP-Adresse entschieden, wohin die Datenpakete weitergesendet werden müssen. Neben der Weiterleitung von Datenpaketen zwischen verschiedenen Teilnetzen ist die Überwachung der Netzauslastung ebenfalls eine Aufgabe der Schicht 3 des OSI-Referenzmodells, weshalb auch eine Zwischenspeicherungsmöglichkeit von Datenpaketen in dieser Schicht zur Verfügung gestellt wird.

Innerhalb eines Teilnetzes, besonders wenn dieses als LAN realisiert ist, wird eine zusätzliche Adressierung der einzelnen Rechner im lokalen Netzwerk auf der Schicht 2 des OSI-Referenzmodells vorgenommen. Als Dienst stellt die Schicht 2 des OSI-Referenzmodells eine fehlerfreie Verbindung zwischen Rechnern innerhalb eines Netzwerks zur Verfügung. Zusätzlich wird von der Schicht 2 auch die Flusskontrolle vorgenommen, wenn Datenpakete nicht so schnell übertragen werden können, wie sie von der Schicht 3 des OSI-Referenzmodells übergeben werden. Für diese Flusskontrolle wird von der Schicht 2 ein so genannter Puffer-Speicher für Datenpakete zur Verfügung gestellt, wobei ein Speicher mit geringer Größe zur vorübergehenden Speicherung von Datenpaketen als Puffer-Speicher bezeichnet wird.

In einem LAN wird, entsprechend den verschiedenen Schichten des OSI-Referenzmodells zwischen einer Hardware-Adresse, der sogenannten Media Access Control- oder MAC-Adresse, und der im Internet gültigen IP-Adresse unterschieden. Jeder Rechner in einem lokalen Netzwerk hat daher mindestens eine MAC- und eine IP-Adresse, über welche er angesprochen werden kann und welche dem Rechner bekannt sind. Für die Übertragung von Datenpaketen innerhalb eines lokalen Netzes von einem sendenden Rechner zu einem Zielrechner wird die MAC-Adresse eingesetzt, die weltweit eindeutig ist, wenn das LAN auf der so genannten Ethernet-Technologie basiert.

Bei der Ethernet-Technologie werden die Daten über einen gemeinsamen Übertragungskanal transportiert. Der Zugriff auf diesen Übertragungskanal erfolgt nach dem Kollisionsverfahren. Das bedeutet, jeder Rechner, der Daten zu senden hat, greift auf den gemeinsamen Übertragungskanal zu, wenn dieser vom sendenden Rechner als frei erkannt wurde. Durch das Kollisionsverfahren wird das gleichzeitige Zugreifen von zwei Rechnern auf den Übertragungskanal erkannt und angezeigt. Der Sendevorgang wird von den Rechnern nach einer vorgegebenen Zeit wiederholt. Die Daten werden bei der Ethernet-Technologie in so genannten Datagrammen oder Frames übertragen, deren Länge flexibel ist und in denen im Rahmenformat die Adresse des Zielrechners und die Adresse des sendenden Rechners innerhalb des lokalen Netzwerkes - also die MAC-Adressen der Rechner - eingetragen sind.

Soll nun ein Datenpaket, in dem die Adresse des Zielrechners als IP-Adresse mitverpackt ist, in einem als LAN realisierten Teilnetz zum Zielrechner geleitet werden, so muss für die Übertragung des Datenpaketes der IP-Adresse des Zielrechners eine im lokalen Netzwerk gültige Rechneradresse des Zielrechners zugeordnet werden. Bei einem auf Ethernet-Technologie basierenden LAN wird beispielsweise für die Übertragung das Datenpaket in einen Frame gepackt und in diesen Frame die MAC-Adresse des Zielrechners eingetragen. Anhand dieser im lokalen Netzwerk gültigen Adresse wird das Datenpaket zum Zielrechner gesendet.

Die zur IP-Adresse des Zielrechners gehörende, im lokalen Netzwerk gültige Adresse wird vom Rechner, der das Datenpaket weiterleitet, über ein Protokoll wie beispielsweise das Address Resolution Protocol erfragt. Das Address Resolution Protocol oder kurz auch ARP genannt, hat die Aufgabe festzustellen, in welchem Format Rechneradressen vorliegen und diese gegebenenfalls von einem Format auf das andere Format umzusetzen.

Damit nicht bei jedem Datenpaket, das an einen bestimmten Zielrechner in einem lokalen Netzwerk gesendet wird, die zugehörige im lokalen Netzwerk gültige Rechneradresse ermittelt werden muss, werden die Zuordnungen von im Internet gültiger Rechneradresse und im lokalen Netzwerk gültiger Rechneradresse in einer Adresstabelle gespeichert. Die Adresszuordnungen in dieser Adresstabelle sind zumeist mit einem Timer versehen, durch den ihre Gültigkeit eingeschränkt wird. Das bedeutet, dass die Adresszuordnungen nach einer bestimmten Zeit, die durch Ablauf des Gültigkeitstimers bestimmt ist, aus der Adresstabelle gelöscht werden. Soll danach ein weiteres Datenpaket an einen Zielrechner gesendet werden, dessen Adresszuordnung aus der Adresstabelle gelöscht wurde, so muss die Zuordnung zwischen der in Internet gültigen Adresse des Zielrechners und der im lokalen Netzwerk gültigen Adresse neu ermittelt und wieder in der Adresstabelle hinterlegt werden.

Während der neuerlichen Ermittlung der Adresszuordnung können allerdings keine Datenpakete an diesen Zielrechner versendet werden. Eine Übertragung von Datenpaketen kann erst nach dem Eintrag der Adresszuordnung in die Adresstabelle erfolgen. Bei den aus dem Stand der Technik bekannten Verfahren werden Datenpakete, die während der Ermittlung und Abspeicherung der Adresszuordnung für einen Zielrechner an diesen Zielrechner gesendet werden sollen, im Puffer-Speicher auf der Schicht 2 des OSI-Referenzmodells zwischengespeichert.

Ein derartiges Verfahren ist bekannt aus US B1 6 747 979.

Dabei tritt allerdings das Problem auf, dass es zum Verlust von Datenpaketen kommt, wenn dieser Puffer-Speicher voll belegt ist und daher keine weiteren Datenpakete aufgenommen werden können. Die Güte des lokalen Netzes, auch als Quality of Service bezeichnet, kann dann nicht mehr aufrecht erhalten werden. Das Auftreten dieses Paketverlustes ist von mehreren Faktoren wie zum Beispiel der Stärke des Datenverkehrs zum betroffenen Zielrechner im Moment des Ungültigwerdens der Adresszuordnung abhängig und daher schwer zu kalkulieren.

Der Erfindung liegt somit die Aufgabe zugrunde, ein Verfahren anzugeben, welches diese Art von Datenpaketverlusten beim Bestimmen und Abspeicherung der Adresszuordnung für einen Zielrechner in der Adresstabelle reduziert und die Güte des lokalen Netzes aufrecht erhält.

Dies geschieht erfindungsgemäß mit einem Verfahren gemäß Anspruch 1 zur Reduktion von Datenpaketverlusten beim Aktualisieren einer Adresstabelle, die in einem Hauptrechner eines lokalen Netzwerkes abgelegt wird und Zuordnungen von im lokalen Netzwerk geltenden Rechneradressen zu im Internet gültigen Rechneradressen zum Versand von Paketen umfasst. Dabei wird eine in der Adresstabelle abgelegte Adresszuordnung nach Ablauf eines Gültigkeitstimers gelöscht und diese Adresszuordnung erst wieder neu abgefragt und in die Adresstabelle eingetragen, wenn wieder ein Datenpaket an eine im Internet gültige Rechneradresse versandt wird, wobei während der Adresszuordnung zu sendende Pakete in einem Puffer-Speicher im lokalen Netzwerk zwischengespeichert werden und die Größe dieses Puffer-Speichers im lokalen Netzwerk entsprechend der erwarteten Auslastung des Netzwerks konfiguriert wird.

Das erfindungsgemäße Verfahren hat den Vorteil, dass die Größe des Puffer-Speichers an die erwartete Auslastung des Netzwerks angepasst wird. Auf diese Weise gehen kaum Datenpakete wegen eines vollen Pufferspeichers verloren. Es kommt damit zu einer Reduktion von Datenpaketverlusten während der Aktualisierung der Adresstabelle und die Güte des lokalen Netzes, auch als Quality of Service bezeichnet, wird ebenfalls aufrechterhalten.

Vorteilhaft ist es, wenn die Größe des Puffer-Speichers im lokalen Netzwerk auf Basis der Anzahl der zu erwartenden Datenpakete, die an eine bestimmte im Internet gültige Adresse gesendet werden, konfiguriert wird. Dadurch wird die Größe des Puffer-Speichers auf die Anzahl der Datenpakete abgestimmt, die während der Aktualisierung der Adresstabelle für eine Zwischenspeicherung im Puffer-Speicher erwartet werden. Der Verlust von Datenpaketen wird damit reduziert und die Quality of Service des lokalen Netzes wird aufrechterhalten.

Günstig ist es dabei auch, wenn die Größe des Puffer-Speichers im lokalen Netzwerk anhand der Zeitdauer für die Aktualisierung der Adresszuordnung in der Adresstabelle konfiguriert wird. Auf diese Weise kann berücksichtigt werden, dass bei einer längeren Zeitdauer für die Aktualisierung ein größerer Puffer-Speicher zum Zwischenspeichern von Datenpaketen zur Verfügung gestellt wird als bei einer kürzeren. Dadurch wird der Verlust von Datenpaketen reduziert, die Güte des lokalen Netzwerkes bleibt erhalten und die Belegung von Speicherplatz erfolgt nach dem aktuellen Bedarf.

Vorteilhaft ist es dabei weiterhin, wenn der Puffer-Speicher als Dienst der Schicht 2 des OSI-Referenzmodells gestaltet ist. Da von dieser Schicht des OSI-Referenzmodells bei der Datenübertragung auch die Flusskontrolle vorgenommen wird, wird von ihr bereits ein Speicher für die Zwischenspeicherung zur Verfügung gestellt. Dieser Speicher kann dann auf einfache Weise als konfigurierbarer Puffer-Speicher für die Zwischenspeicherung von Datenpaketen verwendet werden. Das stellt eine einfach zu realisierende Lösung zur Reduktion von Paketverlusten dar.

Weiterhin ist es günstig, wenn für die Zwischenspeicherung der Datenpakete zusätzlich Dienste der Schicht 3 des OSI-Referenzmodells genutzt werden. Durch diese Nutzung der Schicht 3 des OSI-Referenzmodells wird für Zwischenspeicherung von Datenpaketen weiterer Speicherplatz zur Verfügung gestellt, wenn der, als Dienst der Schicht 2 des OSI-Referenzmodells gestaltete Puffer-Speicher überzulaufen droht. Durch die Nutzung der Dienste der Schicht 3 des OSI-Referenzmodells werden damit drohende Paketverluste verringert.

Bevorzugter Weise wird für die Realisierung der lokalen Netzwerkes der Ethernet-Technologie verwendet - dies insbesondere, weil die Ethernet-Technologie bei lokalen Netzwerken weit verbreitet ist. Im Jahr 2000 wurde der Anteil von lokalen Netzwerken, die auf Ethernet-Technologie basieren, auf 80% geschätzt.

Weiterhin ist es vorteilhaft, wenn für die Ermittlung der Adresszuordnung der im lokalen Netz geltenden Rechneradresse zu einer im Internet gültigen Rechneradresse das Address Resolution Protocol verwendet wird. Dies insbesondere deswegen, weil das Address Resolution Protocol auf einfache Weise Rechneradressen zwischen verschiedenen Adressierungsprotokollen umsetzt.

Die Erfindung wird anhand einer Figur näher erläutert. Diese zeigt beispielhaft den funktionellen Aufbau eines lokalen Netzwerks, in dem das erfindungsgemäße Verfahren zur Anwendung kommt .

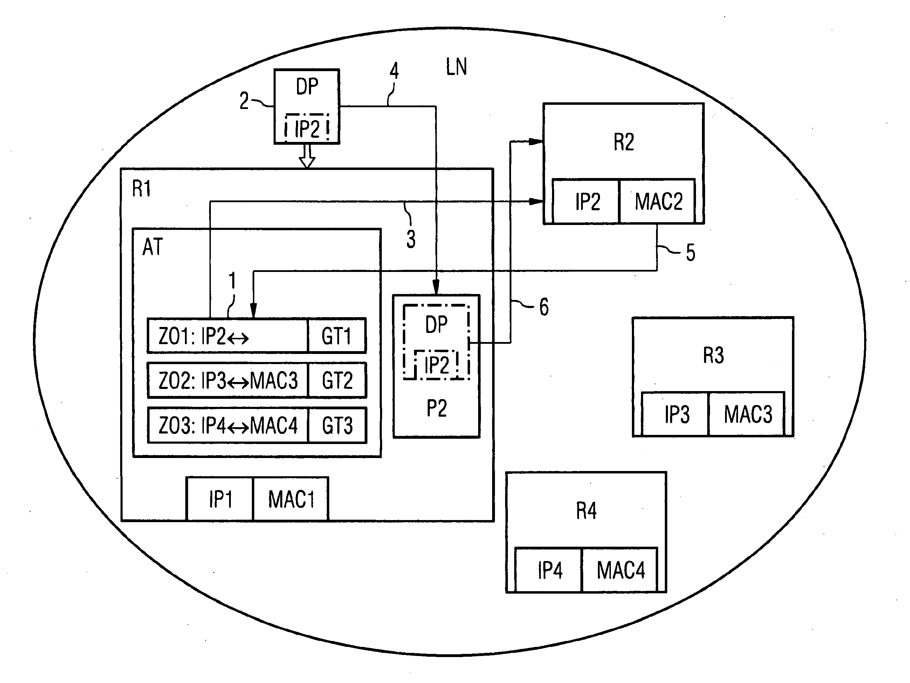

Figur 1 zeigt einen Rechner R1 in einem lokalen Netzwerk LN, das beispielhaft noch weitere Rechner R2, R3, R4 umfasst. Auf jedem dieser Rechner R1, R2, R3, R4 sind die im Internet gültigen Adressen IP1, IP2, IP3, IP4 sowie die im lokalen Netzwerk LN gültigen Adressen MAC1, MAC2, MAC3, MAC4 des jeweiligen Rechners R1, R2, R3, R4 hinterlegt.

Die Verbindung zwischen dem lokalen Netzwerk LN und dem Internet erfolgt über den Rechner R1, der als sogenannter Edge-Router ausgestaltet ist, d.h. dass dieser Rechner R1 am äußeren Bereich des lokalen Netzwerkes LN, wo beispielsweise Endgeräte oder die Verbindung zum Internet angeschlossen sind, eingesetzt wird und den Vorteil mit sich bringt, dass nicht alle Rechner R1, R2, R3, R4 des lokalen Netzwerkes LN über alle möglichen Schnittstellen verfügen müssen, sondern nur der Rechner R1.

Wird ein Datenpaket DP nun aus dem Internet zu einem Rechner R1, R2, R3, R4 des lokalen Netzwerk LN gesendet, so wird es zuerst zum Rechner R1 geleitet. Soll nun dieses Datenpaket DP beispielsweise im lokalen Netz LN zum Rechner R2 gelangen, so wird das vom Rechner R1 durch die vom Datenpaket DP mitgelieferte im Internet gültige Adresse IP2 des Rechners R2 erkannt und vom Rechner R1 mittels Address Resolution Protocol die aktuelle im lokalen Netzwerk LN gültige Adresse MAC2 des Rechners R2 angefordert. Die im lokalen Netzwerk LN gültige Adresse MAC2 des Rechners R2 wird vom Rechner R2 an den Rechner R1 zurückgesendet, das Datenpaket DP mit der Adresse MAC2 versehen und dann im lokalen Netzwerk LN zum Rechner R2 gesendet.

Damit nicht immer für jedes Datenpaket DP, das zum Rechner R2 übertragen wird, die im lokalen Netz gültige Adresse MAC2 des Rechners R2 neu angefordert werden muss, wird auf dem Rechner R1 eine Adresstabelle AT eingerichtet. In dieser Adresstabelle AT sind Adresszuordnungen ZO1, Z02, Z03 für die Übertragung von Datenpaketen DP zu einem Rechner R2, R3, R4 des lokalen Netzwerkes LN hinterlegt. Durch die Adresszuordnung ZO1 wird beispielsweise die im Internet gültige Adresse IP2 des Rechners R2 mit der im lokalen Netzwerk LN gültigen Adresse MAC2 der Rechners R2 verknüpft. Für das Versenden eines Datenpaketes DP zum Rechner R2 wird dann die im lokalen Netzwerk LN gültige Adresse MAC2 des Rechners R2 aus der Adresstabelle AT ermittelt.

Zu jeder Adresszuordnung ZO1, Z02, Z03 gibt es in der Adresstabelle AT einen Gültigkeitstimer GT1, GT2, GT3 nach dessen Ablauf die Adresszuordnung ZO1, Z02, Z03 aus der Adresstabelle AT gelöscht wird. Ist beispielsweise der Gültigkeitstimer GT1 abgelaufen, so wird in einem Schritt 1 die Adresszuordnung ZO1 aus der Adresstabelle AT gelöscht.

Kommt in einem Schritt 2 ein Datenpaket DP aus dem Internet im lokalen Netzwerk LN am Rechner R1 an, das entsprechend der Adresszuordnung ZO1 zum Rechner R2 gelangen soll, so wird in einem Schritt 3 die im lokalen Netzwerk gültige Adresse MAC2 des Rechners R2 mittels Address Resolution Protocol und anhand der im Internet gültigen Adresse IP2 vom Rechner R1 beim Rechner R2 angefragt.

In einem weiteren Schritt 4 wird dieses Datenpaket DP in einem Puffer-Speicher P2 bis zum Versand zum Rechner R2 zwischengespeichert. Der Puffer-Speicher P2 ist als Dienst der Schicht 2 des OSI-Referenzmodells und als durch einen Anwender wie z.B. einen Betreiber des lokalen Netzwerkes LN entsprechend der erwarteten Auslastung, der erwarteten Anzahl an Datenpaketen DP und/oder der Zeitdauer für die Aktualisierung der Adresszuordnung ZO1, ZO2, ZO3 in der Adresstabelle AT konfigurierbar gestaltet.

In einem Schritt 5 wird die im lokalen Netzwerk gültige Adresse MAC2 vom Rechner R2 an den Rechner R1 zurückgesendet, die aktualisierte Adresszuordnung ZO1 wieder in der Adresstabelle AT eingetragen und der Gültigkeitstimer GT1 neu gestartet. Nach erfolgter Aktualisierung der Adresszuordnung ZO1 wird dann in einem Schritt 6 das im Puffer-Speicher P2 zwischengespeicherte Datenpaket DP mit der Adresse MAC2 versehen und zum Rechner R2 gesendet.

Müssen im Puffer-Speicher P2 aufgrund der Aktualisierung mehrerer Adresszuordnungen ZO1, Z02, Z03 mehr Datenpakete DP als die erwartete Anzahl von Datenpaketen DP abgelegt werden, so wird zusätzlich eine Zwischenspeicherung, die als Dienst der Schicht 3 des OSI-Referenzmodells gestaltet ist, herangezogen.

## Patentansprüche

1. Verfahren zur Reduktion von Datenpaketverlusten beim Aktualisieren einer Adresstabelle (AT), die in einem Rechner (R1) eines lokalen Netzwerkes (LN) abgelegt wird und Zuordnungen (ZO1, ZO2, Z03) von im lokalen Netzwerk (LN) geltenden Rechneradressen (MAC1, MAC2, MAC3, MAC4) zu im Internet gültigen Rechneradressen (IP1, IP2, IP3, IP4) zum Versand von Datenpaketen (DP) umfasst, wobei eine in der Adresstabelle (AT) abgelegte Adresszuordnung (ZO1, ZO2, ZO3) nach Ablauf eines Gültigkeitstimers (GT1, GT2, GT3) gelöscht wird, und wobei diese Adresszuordnung (Z01, ZO2, Z03) erst neu abgefragt und in die Adresstabelle (AT) eingetragen wird, wenn wieder ein Datenpaket (DP) an eine im Internet gültige Adresse (IP1, IP2, IP3, IP4) eines Rechners (R1, R2, R3, R4) des lokalen Netzwerk (LN) versandt wird, **dadurch gekennzeichnet, dass** während der Aktualisierung der Adresszuordnung (ZO1, ZO2, ZO3) zu sendende Datenpakete (DP) in einem Puffer-Speicher (P2) zwischengespeichert werden, und dass die Größe dieses Puffer-Speichers (P2) entsprechend der erwarteten Auslastung des lokalen Netzwerkes (LN) konfiguriert wird, wobei als Basis eine Anzahl an zu erwartenden Datenpaketen (DP), die an eine bestimmte im Internet gültige Adresse (IP1, IP2, IP3, IP4) eines Rechners (R1, R2, R3, R4) des lokalen Netzwerk (LN) gesendet werden, verwendet wird.

2. Verfahren nach Anspruch 1, **dadurch gekennzeichnet, dass** die Größe des Puffer-Speichers (P2) anhand einer Zeitdauer für die Aktualisierung der Adresszuordnung (ZO1, ZO2, ZO3) in der Adresstabelle (AT) konfiguriert wird.

3. Verfahren nach einem der Ansprüche 1 bis 2 **dadurch gekennzeichnet, dass** der Puffer-Speicher (P2) von der so genannten Leitungsschicht für eine Flusskontrolle bei Übertragung von Datenpaketen zur Verfügung gestellt wird.

4. Verfahren nach Anspruch 3 **dadurch gekennzeichnet, dass** für die Zwischenspeicherung der Datenpakete (DP) zusätzlich die so genannte Netzwerkschicht, welche der so genannten Leitungsschicht übergeordnet ist, genutzt wird.

5. Verfahren nach Ansprüche 1 bis 4 **dadurch gekennzeichnet, dass** für die Realisierung des lokalen Netzwerkes (LN) ein Netzwerk nach der so genannten Ethernet-Technologie vorgesehen ist.

6. Verfahren nach einem der Ansprüche 1 bis 5 **dadurch gekennzeichnet, dass** für die Ermittlung der Adresszuordnung (ZO1, Z02, Z03) der im lokalen Netz (LN) geltenden Rechneradresse (MAC1, MAC2, MAC3, MAC4) zu einer im Internet gültigen Rechneradresse (IP1, IP2, IP3, IP4) das Address Resolution Protocol verwendet wird.

## Claims

1. Method for reducing data packet losses on updating an address table (AT) stored in a computer (R1) of a local network (LN), said address table comprising allocations (ZO1, Z02, Z03) of current computer addresses (MAC1, MAC2, MAC3, MAC4) in the local network (LN) to internet-valid computer addresses (IP1, IP2, IP3, IP4) for the transmission of data packets (DP), wherein an address allocation (ZO1, Z02, Z03) stored in the address table (AT) is deleted after expiry of a validity timer (GT1, GT2, GT3), and said address assignment (ZO1, Z02, Z03) is only requested again and entered in the address table (AT), when a data packet (DP) is again transmitted to an internet-valid address (IP1, IP2, IP3, IP4) of a computer (R1, R2, R3, R4) in the local network (LN),
**characterised in that**
during the updating of the address allocation (ZO1, Z02, Z03) data packets for transmission (DP) are buffered in a buffer memory (P2), the size of said buffer memory (P2) being configured in accordance with the expected load of the local network (LN),
wherein a number of data packets (DP) to be expected sent to a specific internet-valid address (IP1, IP2, IP3, IP4) of a computer (R1, R2, R3, R4) of the local network (LN) are used as a basis.

2. Method according to claim 1, **characterised in that** the size of the buffer memory (P2) is configured according to the length of time it takes to update the address allocations (ZO1, ZO2, ZO3) in the address table (AT).

3. Method according to one of claims 1 to 2, **characterised in that** the buffer memory (P2) is made available by what is known as the circuit layer for flow control in the transmission of data packets.

4. Method according to claim 3, **characterised in that** for the buffering of data packets (DP) additionally what is known as the network layer, which has precedence over the so-called circuit layer, is used.

5. Method according to claims 1 to 4, **characterised in that** for carrying out the local network (LN), a network according to what is known as Ethernet technology is provided.

6. Method according to one of claims 1 to 5, **characterised in that** the Address Resolution Protocol is used for the determination of the address allocation (ZO1, ZO2, ZO3) of the current computer address (MAC1, MAC2, MAC3, MAC4) in the local network (LN) to an internet-valid computer address (IP1, IP2, IP3, IP4).

## Revendications

1. Procédé de réduction de pertes de paquets de données lors de la mise à jour d'une table d'adresses (AT) qui est stockée dans un ordinateur (R1) d'un réseau local (LN) et qui comporte des affectations (ZO1, ZO2, ZO3) d'adresses d'ordinateurs (MAC1, MAC2, MAC3, MAC4), valides dans le réseau local (LN), à des adresses d'ordinateurs (IP1, IP2, IP3, IP4) valides sur l'Internet dans le but d'envoyer des paquets de données (DP), une affectation d'adresse (ZO1, ZO2, ZO3) stockée dans la table d'adresses (AT) étant effacée au bout d'un certain temps de fonctionnement d'une horloge de validité (GT1, GT2, GT3) et cette affectation d'adresse (ZO1, ZO2, ZO3) n'étant de nouveau consultée et entrée dans la table d'adresses (AT) que lorsqu'un paquet de données (DP) est de nouveau envoyé à une adresse (IP1, IP2, IP3, IP4), valide sur l'Internet, d'un ordinateur (R1, R2, R3, R4) du réseau local (LN), **caractérisé en ce que**, pendant la mise à jour de l'affectation d'adresses (ZO1, Z02, Z03), des paquets de données à envoyer (DP) sont mémorisés temporairement dans une mémoire tampon (P2) et **en ce que** la taille de cette mémoire tampon (P2) est définie en fonction de l'occupation du réseau local (LN) à laquelle on s'attend, un certain nombre de paquets de données (DP) auxquels on s'attend, qui sont envoyés à une certaine adresse (IP1, IP2, IP3, IP4), valide sur l'Internet, d'un ordinateur (R1, R2, R3, R4) du réseau local (LN), étant utilisé comme base.

2. Procédé selon la revendication 1, **caractérisé en ce que** la taille de la mémoire tampon (P2) est définie en se référant à une durée de la mise à jour de l'affectation d'adresses (ZO1, Z02, Z03) dans la table d'adresses (AT).

3. Procédé selon l'une des revendications 1 à 2, **caractérisé en ce que** la mémoire tampon (P2) est mise à disposition par ce que l'on appelle une couche de transmission pour effectuer un contrôle de flux lors de la transmission de paquets de données.

4. Procédé selon la revendication 3, **caractérisé en ce que** ladite couche de réseau, qui est hiérarchiquement supérieur à ladite couche de transmission, est utilisée pour la mémorisation temporaire des paquets de données (DP).

5. Procédé selon les revendications 1 à 4, **caractérisé en ce qu'**il est prévu un réseau de ladite technologie Ethernet pour réaliser le réseau local (LN).

6. Procédé selon l'une des revendications 1 à 5, **caractérisé en ce que** l'on utilise le protocole de résolution d'adresses pour déterminer l'affectation (ZO1, ZO2, ZO3) de l'adresse d'ordinateur (MAC1, MAC2, MAC3, MAC4), valide dans le réseau local (LN), à une adresse d'ordinateur (IP1, IP2, IP3, IP4) valide sur l'Internet.
